# EUROPEAN PATENT APPLICATION

(11) **EP 4 635 849 A1**
(43) Date of publication of application: **22.10.2025**
(21) Application number: 24170377.6
(22) Date of filing: 15.04.2024
(51) Int. Cl.: B64D 13/00

(54) **AIRCRAFT PASSENGER SERVICE UNIT, AIRCRAFT COMPRISING THE SAME, AND METHOD FOR CONTROLLING AN AIRCRAFT PASSENGER SERVICE UNIT**

(71) Applicant: Goodrich Lighting Systems GmbH & Co. KG, 59557 Lippstadt (DE)
(72) Inventor: Hessling-von Heimendahl, Andre, 56073 Koblenz (DE); Leuschner, Jens, 59519 Möhnesee (DE); Jha, Anil Kumar, 59555 Lippstadt (DE)
(74) Representative: Schmitt-Nilson Schraud Waibel Wohlfrom Patentanwälte Partnerschaft mbB

(57) **Abstract**

An aircraft passenger service unit (2) for being installed in an overhead position in an aircraft passenger cabin (102) comprises at least two gaspers (29). Each of the at least two gaspers (29) is oriented towards a respective passenger seat (80a). The aircraft passenger service unit (2) further comprises an electric motor (204) configured to drive an impeller (203). The impeller (203) is located inside an airflow tube (205) that is in fluid communication with the at least two gaspers (29) via respective airflow outlets (206). The impeller (203) is arranged to provide an airflow to the at least two gaspers (29). In addition, the aircraft passenger service unit (2) comprises at least one valve (207) for controlling the airflow to the at least two gaspers (29).

## Description

The present invention is in the field of aircraft passenger service units for being installed in an overhead position in an aircraft passenger cabin. In particular, the present invention relates to aircraft passenger service units comprising gaspers, a to a system comprising such an aircraft passenger service unit, to an aircraft comprising a plurality of such aircraft passenger service units, and to a method for controlling such an aircraft passenger service unit.

Passenger aircraft, such as commercial airplanes, which comprise a passenger cabin with passenger seats, are usually equipped with aircraft passenger service units ("PSUs"), which are arranged above the passenger seats. Such aircraft passenger service units may comprise individually switchable passenger reading lights, loudspeakers, switchable visual signs and oxygen masks, which may be released and activated for supplying oxygen rich gas to the passengers in emergency situations. Furthermore, such aircraft passenger service units may comprise air gaspers for supplying fresh air to the passengers.

In order to provide air to the gaspers, the air may have to be channeled to every gasper across the length of the fuselage. A low pressure system of air supply is generally used. The low pressure system commonly has to generate the pressure and distribution of the air for the gaspers, while consuming constant power even if no airflow is needed. Such a low pressure system generally requires large diameter air ducts, which are costly, take up a lot of space and which are difficult and time consuming to install.

It would therefore be beneficial to provide an aircraft passenger service unit that has improved air supply properties.

Exemplary embodiments of the invention include an aircraft passenger service unit for being installed in an overhead position in an aircraft passenger cabin, which aircraft passenger service unit comprises at least two gaspers. Each of the at least two gaspers is oriented towards a respective passenger seat. In particular, the at least two gaspers may have different / angled orientations. The aircraft passenger service unit further comprises an electric motor configured to drive an impeller, wherein the impeller is located inside an airflow tube that is in fluid communication with the at least two gaspers via respective airflow outlets. The impeller is arranged to provide an airflow to the at least two gaspers. In addition, the aircraft passenger service unit comprises at least one valve for controlling the airflow to the at least two gaspers.

In some embodiments, the aircraft passenger service unit may not require a low pressure system of air supply, but instead take air from the cabin and direct such air through the gaspers. In some examples, the air supply via the gaspers may only require electrical energy when the airflow is switched on / is desired. This is in contrast to the low pressure systems of previous approaches, which usually require energy even if all the gaspers are switched off. Alternatively or additionally, the air supply via the gaspers, as described herein, may at least partially rely on air from a low pressure system. As compared to the low pressure systems of previous approaches, the air supply capacities of the aircraft passenger service units, as described herein, may by provided in a more efficient installation process and/or may be more efficient in operation. Also, with at least two gaspers being supplied with airflow from a single motor and a single impeller, a very space-efficient and energy-efficient implementation of the aircraft passenger service unit may be provided. The at least two gaspers / airflow outlets may in particular be two or three or four or five or more gaspers / airflow outlets.

The airflow tube is in fluid communication with each of the at least two gaspers. In particular, the airflow tube is in fluid communication with each of the at least two gaspers via a respective airflow outlet. In other words, for each of the at least two gaspers, a respective airflow outlet provides a fluid connection between the airflow tube and the respective gasper. The gasper may comprise or may be formed by a mouth portion of the respective airflow outlet. The gasper may be understood as the air outlet, as seen / perceived by the passenger, when seated on the passenger seat. The airflow outlets may be configured to supply some or all of the air to be distributed by the gaspers. Each passenger seat may have one or more dedicated gaspers.

The electric motor driving the impeller inside the airflow tube may provide air through the gaspers via the airflow outlets. The at least one valve may control the airflow to the gaspers, which may allow controlling the amount of air being provided through an individual gasper. Thus, the outflow from a first gasper of the at least two gaspers may be different from the outflow of a second gasper of the at least two gaspers due to a position of the at least one valve.

The at least one valve is arranged for controlling the airflow to the at least two gaspers. The at least one valve may be arranged at or within the airflow outlets. For example, the at least one valve may be a plurality of valves, and each of the airflow outlets may have a respective valve arranged therein. In a particular example, the aircraft passenger service unit may have two or three gaspers and, accordingly, may have two or three airflow outlets, with a valve being arranged in each of the airflow outlets. In this way, a convenient, individual setting of the desired outflow per gasper may be achieved. It is also possible that the number of valves is smaller than the number of gaspers and that the valve(s) is/are arranged at a transition from the airflow tube to the airflow outlets. In a particular example, the aircraft passenger service unit may have two gaspers and, accordingly, may have two airflow outlets. One valve may be arranged at the transition between the airflow tube and the two airflow outlets for setting a relative opening level for the two airflow outlets. Together with the control of the electric motor / impeller, it is possible to set different desired outflows from the two gaspers.

The at least one valve may be at least one airflow regulating valve, also referred to as at least one air valve. The at least one valve may in particular be at least one electrically operated / electrically powered airflow regulating valve. In an exemplary implementation, the at least one valve may be at least one airflow regulating and shut-off valve, such as a butterfly valve. The at least one valve may be any suitable valve that is capable of adapting an airflow resistance through a tube and/or capable of guiding / splitting an airflow into different tubes with different relative intensities. The expression position of the valve is understood as the position of a movable portion of the valve for setting / adjusting the airflow through / along the valve. This will be described in more detail below.

According to a further embodiment, the aircraft passenger service unit comprises a controller for setting a rotational speed of the impeller and/or a position of the at least one valve on the basis of a desired outflow from each of the at least two gaspers. The controller may comprise dedicated circuitry for the evaluation of input signals, such as from a remote control and/or a control button, and for generating signals to operate the at least one valve and control the speed of the electric motor. The controller, as described herein, may be a dedicated controller for the air supply via the at least two gaspers. Alternatively, the controller of the aircraft passenger service unit may be configured to control other elements of the aircraft passenger service unit. For example, the controller may comprise an oxygen mask control unit to control oxygen masks of the aircraft passenger service unit and/or a reading light control unit to control reading lights of the aircraft passenger service unit. In an example, one valve may be arranged to be sufficient for the control of two gaspers. An additional valve may be necessary for each additional gasper. Alternatively, each gasper may be associated with one valve. The valves may be butterfly valves driven by electrical actuators. In one example, the controller may be connected to at least one sensor, e.g., to effect closed loop control of the electric motor and/or the at least one valve. The at least one sensor may provide measurements of rotational speed of the electric motor, position feedback of the valve and/or air pressure at a location inside the airflow tube, the airflow outlet(s) and/or the gasper(s).

According to a further embodiment, the desired outflow for each of the at least two gaspers is settable by remote control. The remote control may in particular be an in-seat control or part of an in-flight entertainment system (IFE). In this way, the gaspers may be switched on and off and/or adjusted regarding the air flow intensity by remote control, without the passengers standing up or leaving their seat. The remote control may be integrated into the seat, in particular into the armrest of the seat. Each gasper may have its own remote control such that two gaspers are controlled separately by one remote control each. In particular, each passenger seat may have a remote control functionally connected to the gasper assigned to said passenger seat. Furthermore, the remote control may have additional functions such as a headphone jack, a switch for a reading light of the aircraft passenger service unit and a button to alert cabin personnel. The in-flight entertainment system may comprise a touch screen to switch the gasper on and off. The touch screen may additionally serve to adjust the outflow of the gasper. Embodiments, in which the outflow of the gaspers is settable via remote control, may allow the use of gaspers even in wide-body aircraft, which may have ceilings too high for direct manual interaction with a gasper above a passenger seat. Also, embodiments, in which the outflow of the gaspers is settable via remote control, may allow the use of gaspers without manual interaction with the gaspers, thus eliminating or reducing the need to clean the gaspers and helping to reduce the ground time of aircraft. Also, the risk of passengers damaging the gaspers can be reduced as compared to previous approaches.

According to a further embodiment, the desired outflow for each of the at least two gaspers is settable at the aircraft passenger service unit itself, in particular using a control button or control lever on the aircraft passenger service unit. This may be in addition to the remote control or as an alternative. If no remote control is used, the aircraft passenger service unit does not necessarily have to be functionally connected to the passenger seat or in-flight entertainment system. This may in some cases reduce costs and allow for a lower complexity of assembly.

According to a further embodiment, the desired outflow for each of the at least two gaspers is settable by a touchless control. Such a touchless control may comprise a capacitive sensor element and/or an optical distance sensor. A touchless control may have lower wear and tear than a control requiring touch, such as a mechanical switch. Furthermore, a touchless control may lead to increased hygiene as the transmission of pathogens through touch may be avoided. The touchless control may be part of the remote control and/or part of the aircraft passenger service unit.

According to a further embodiment, the electric motor of the aircraft passenger service unit is a brushless motor. Such a brushless motor may have a higher power-to-weight ratio, higher efficiency, lower maintenance requirements and longer service life than a brushed motor. The brushless motor may allow an aircraft passenger service unit to have a low weight and a low failure rate. The brushless motor may allow for high speed and near instantaneous control of speed. The brushless motor may have an integrated brushless motor control unit or may be connected to a separate brushless motor control unit, which may be separate from or integrated with other electronic circuitry of the aircraft passenger service unit. For example, the brushless motor control unit may be integrated with the controller of the aircraft passenger service unit.

According to a further embodiment, the electric motor is located inside the airflow tube. In this way, a particularly compact integration of the electric motor and impeller may be achieved and an overall small space envelope of the air supply system may be achieved. It is also possible that the electric motor is located outside the airflow tube. The electric motor may then be coupled to the impeller, which is inside the airflow tube, via a suitable driving mechanism.

According to a further embodiment, the aircraft passenger service unit may comprise at least one intake tube with an inlet, wherein the at least one intake tube is in fluid communication with the airflow tube. The at least one intake tube may be a plurality of intake tubes. The at least one intake tube may in particular by at least one conical intake tube. In addition / as an alternative, the airflow tube may be a conical airflow tube. In addition / as an alternative, the at least two airflow outlets may be at least two conical airflow outlets. The at least one intake tube may be conical and tapered towards its inlet. The airflow tube may be conical and tapered towards the airflow outlets. The airflow outlets may be tapered towards the gaspers. The conical shape of intake tube(s), airflow tube and/or airflow outlets may contribute to sound dampening and noise reduction.

According to an embodiment, the at least one intake tube is arranged to be in fluid communication with the airflow tube, which is in fluid communication with the airflow outlets. During operation, for example, air may flow into the inlet(s) of the at least one intake tube, from the at least one intake tube to the airflow tube and then further into the airflow outlets. From the airflow outlets, the air may leave through the gaspers. In an embodiment, each airflow outlet is connected to exactly one gasper. The at least one intake tube may draw air from the cabin. Alternatively or additionally, the at least one intake tube may draw air from an air supply system, such as a low pressure system.

According to a further embodiment, the at least one intake tube and/or the airflow tube and/or the airflow outlets may comprise a broadband noise attenuator. This broadband noise attenuator may consist of or comprise foam. The electric motor, the impeller and/or the airflow itself may cause noise. In order to reduce noise emission into the cabin, a broadband noise attenuator may be used. Such a broad-band noise attenuator, e.g., foam, may be arranged as inside lining for the at least one intake tube, the airflow tube and/or the airflow outlets. Alternatively or additionally, the broadband noise attenuator, e.g., foam, may be arranged on the outside of the intake tube, airflow tube and/or airflow outlet.

According to a further embodiment, the at least one intake tube and/or the airflow tube and/or the airflow outlets of the aircraft passenger service unit comprise a Helmholtz resonator lining. The Helmholtz resonator lining may be shaped / configured for noise reduction. The Helmholtz resonator may in particular be designed to reduce specific frequencies of sound. In an embodiment, the Helmholtz resonator is designed to reduce the frequencies of sound generated by the electric motor and impeller. To this effect, the electric motor may be operated at a fixed rotational frequency or at one of a limited subset of possible rotational frequencies.

According to a further embodiment, the controller is configured to control the impeller in discrete steps of rotational frequency. The impeller, when driven by the electric motor, generates characteristic noise, which depends on the blade passage noise equal to the number of blades multiplied by the rotational frequency. In particular, the impeller may generate characteristic noise at a base frequency, corresponding to the number of blades multiplied by the rotational frequency of the impeller, and at harmonics of the base frequency. If the rotational frequency is increased in blade number increments, then the peak frequencies of the emitted noise generally remain the same. The Helmholtz resonator lining may then be designed accordingly to attenuate some or all said frequencies.

According to a further embodiment, the impeller has a diameter of between 5 cm and 15 cm, in particular of between 5 cm and 10 cm.

According to a further embodiment, the impeller has a plurality of rotor blades, in particular 2 or 3 or 4 or 5 or 6 or more rotor blades.

According to a further embodiment, the impeller is spaced from the at least two gaspers by at least 5 cm, in particular by at least 10 cm, further in particular, by between 10 cm and 20 cm.

It has been found that, with the above dimensions and rotor blade numbers, a good sound dampening may be achieved, together with a good air outflow performance and a good integration into the aircraft passenger service unit. In particular, the spacing between the impeller and the gaspers may help to dampen the sound within the airflow tube / airflow outlets and help to keep the noise disturbance for the passengers within acceptable limits.

It is stressed that the features regarding sound dampening, as described herein, are considered their own invention and are considered inventive irrespective of the number of gaspers and airflow outlets. In particular, any one or any subset or all of the features of the airflow tube and/or the airflow outlet(s) and/or the intake tube(s) being conical, of the airflow tube and/or the airflow outlet(s) and/or the intake tube(s) comprising a broadband noise attenuator, of the airflow tube and/or the airflow outlet(s) and/or the intake tube(s) comprising a Helmhotz resonator, of the impeller being controlled in discrete steps of rotational frequency, and of the disclosed dimensions of the impeller and/or the gasper(s) and/or the spacing between the impeller and the gasper(s) may be implemented for a single gasper / airflow outlet or for two or three or four or more gaspers / airflow outlets and result in a beneficial implementation of the aircraft passenger service unit.

According to a further embodiment, each of the at least two gaspers is in a pre-defined orientation, matching 95 % of humans in terms of size, when seated in the respective passenger seat, without further adjustment. The direction of conventional gaspers may need to be adjusted to direct the airflow to the passenger. In the embodiment described, such adjustment is not necessary as the airflow is already aimed at a direction, which is appropriate for at least 90%, in particular at least 95%, of the population. The airflow is designed to be appropriately directed towards a passenger, whose size is within the central 90%, in particular 95%, of the body size distribution of the population. This eliminates the need for manual adjustment of the gasper, which may otherwise be a cause of wear and mechanical deterioration. Furthermore, as touching the gasper is no longer necessary, hygiene may be improved and cleaning of the gasper may be facilitated. The described effect may be achieved with a wider outflow cross-section, as compared to previous approaches. While previous approaches relied on a nozzle to achieve a suitable air flow speed from the low pressure system, the provision of the electric motor and the impeller within the aircraft passenger service unit may allow for achieving a suitable air flow speed across a wider cross-section gasper.

According to a further embodiment, the gasper may have an opening of between 2 cm² and 6 cm² in cross-section, in particular an opening of between 3 cm² to 5 cm² in cross-section. This may be substantially wider than an opening cross-section of about 1 cm² of a nozzle, as used in previous approaches.

According to a further embodiment, the aircraft passenger service unit comprises a removable cover, arranged over a plurality of oxygen masks, and/or at least one reading light. In addition to providing air outflow through the gaspers, the aircraft passenger service unit may serve other functions. For example, emergency oxygen masks may be stored in and released from the aircraft passenger service unit.

To this end, the aircraft passenger service unit may comprise a plurality of oxygen masks and a removable cover, arranged over the plurality of oxygen masks. Furthermore, the aircraft passenger service unit may comprise one or more reading lights, which may be switched on or off at the aircraft passenger service unit itself or via remote control, in particular from the armrest or in-flight entertainment system.

According to a further embodiment, a central controller is configured to be coupled to the controllers of a plurality of aircraft passenger service units. The central controller and the controllers of the plurality of aircraft passenger service units may be coupled in such a way that the central controller can set an outflow of the at least two gaspers, in particular by overriding settings made on the aircraft passenger service unit or via its remote control. In this way, the gaspers may be switched on or off centrally.

Exemplary embodiments of the invention further include a system, comprising an aircraft passenger service unit according to an embodiment of the invention and a remote control for controlling the desired outflow for each of the at least two gaspers. In such a system, the remote control may be configured to communicate with the controller of the aircraft passenger service unit to set a desired outflow for the at least two gaspers.

Exemplary embodiments of the invention also include an aircraft, such as an airplane or a helicopter, comprising a passenger cabin and a plurality of aircraft passenger service units according to an embodiment of the invention. The plurality of aircraft passenger service units may be installed along a longitudinal direction of the aircraft within the passenger cabin.

Exemplary embodiments of the invention also include an aircraft, such as an airplane or a helicopter, comprising a passenger cabin and a plurality of systems that each include an aircraft passenger service unit according to an embodiment of the invention and a remote control for controlling the desired outflow for each of the at least two gaspers.

Exemplary embodiments of the invention further include a method of controlling an aircraft passenger service unit according to an embodiment of the invention, wherein the method includes the steps of receiving passenger input from at least two passengers to set a desired outflow from the at least two gaspers and controlling the impeller as well as the at least one valve according to the desired outflow. According to an embodiment, the controller of the aircraft passenger service unit receives the input from the at least two passengers, e.g., via remote control, and regulates the impeller and the at least one valve to achieve the desired outflow from the at least two gaspers.

The additional features, modifications and effects, described herein with respect to exemplary embodiments of an aircraft passenger service unit, apply to the exemplary embodiments of the system, the aircraft and the method in an analogous manner.

Further exemplary embodiments of the invention are described below with respect to the accompanying drawings, wherein:
Figure 1 depicts a schematic side view of an aircraft in accordance with an exemplary embodiment of the invention;
Figure 2 shows a schematic longitudinal cross-sectional view of a section of a passenger cabin of the aircraft of Figure 1;
Figure 3 depicts a schematic plan view of an aircraft passenger service unit according to an exemplary embodiment of the invention;
Figure 4 shows a schematic view of selected components of an aircraft passenger service unit according to an exemplary embodiment of the invention;
Figure 5 shows another schematic view selected components of an aircraft passenger service unit according to an exemplary embodiment of the invention;
Figure 6 depicts a schematic view of selected components of an aircraft passenger service unit according to another exemplary embodiment of the invention; and
Figure 7 depicts a Helmholtz resonator, as may be used in an aircraft passenger service unit in accordance with an exemplary embodiment of the invention.

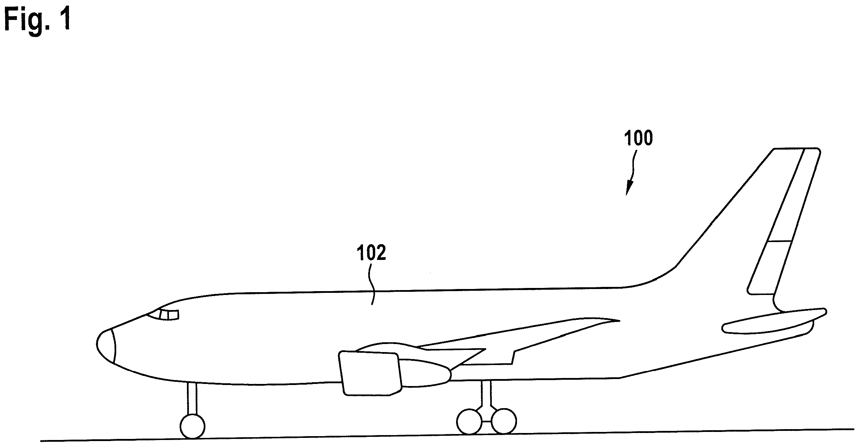

Figure 1 shows a schematic side view of an aircraft 100, in particular of an airplane, in accordance with an exemplary embodiment of the invention. In the exemplary embodiment shown in Figure 1, the aircraft 100 is a large passenger airplane, comprising a cockpit and a passenger cabin 102. The aircraft 100 may be a commercial passenger airplane, a private airplane, or a military aircraft. The aircraft 100 may comprise a plurality of aircraft passenger service units in accordance with exemplary embodiments of the invention, as described herein. It is also possible that one or more aircraft passenger service units according to an exemplary embodiments of the invention are employed in a rotorcraft, such as a helicopter.

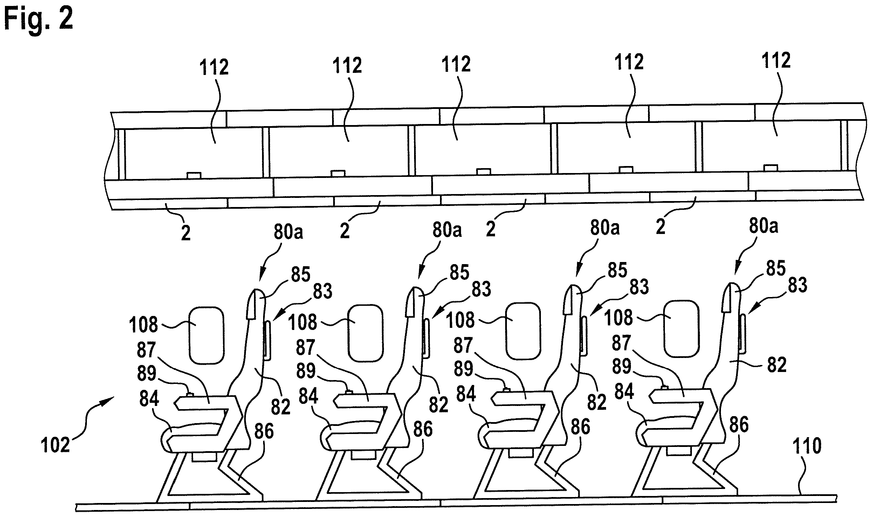

Figure 2 shows a longitudinal cross-sectional view of a portion of the passenger cabin 102 of the aircraft 100 shown in Figure 1. In the passenger cabin 102 of Figure 2, a plurality of aircraft passenger service units 2 in accordance with an exemplary embodiment of the invention are employed. Four seats 80a, also referred to as passenger seats 80a, are shown in Figure 2. The passenger seats 80a are mounted to a floor 110 of the passenger cabin 102. Each of the depicted passenger seats 80a belongs to a different seating row.

For each of the seating rows, a window 108 is provided, which allows the passengers to view outside the aircraft 100. Further, a plurality of overhead baggage compartments 112 are shown, which provide storage space for baggage.

Each of the passenger seats 80a has a seat pan 84, a seat base 86, an armrest 87, and a seat back (backrest) 82, including a headrest 85, and a foldable table 83, mounted to a rear side of the backrest 82. The armrest 87 may be pivotable around a horizontal axis. A remote control 89 is integrated into the armrest 87. The seat base 86 supports the backrest 82 and the seat pan 84. An aircraft passenger service unit 2 is arranged above each of the seat rows 80, respectively.

The depicted passenger seats 80a are aisle seats. Each seating row may further have a middle seat and a window seat. In the view of Figure 2, the middle seats and window seats are blocked from view by the depicted aisle seats. The aircraft may have aisle, middle, and window seats on the other side of the aisle as well. These seats on the other side of the aisle may be associated with their own aircraft passenger service units.

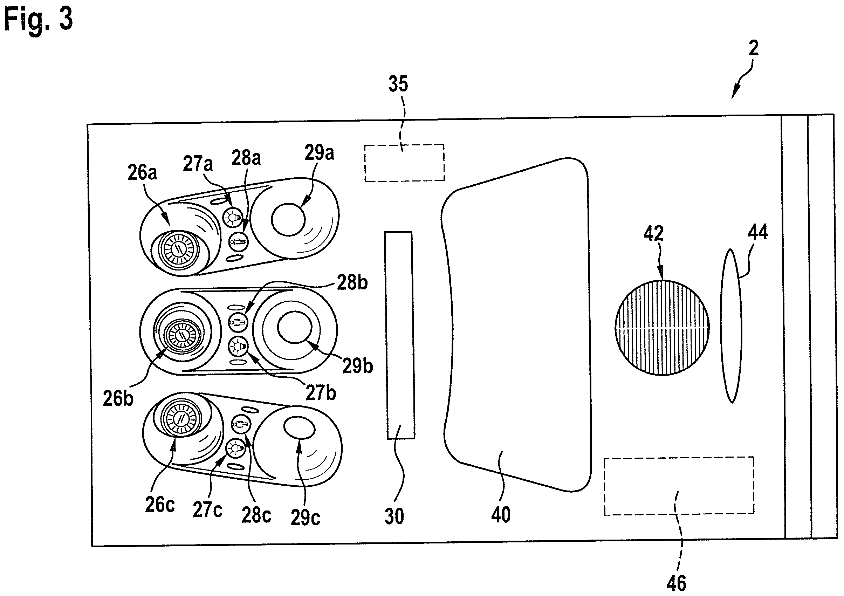

Figure 3 depicts a schematic plan view of an overhead aircraft passenger service unit 2, which is arranged above the passengers of a single seating row, comprising a passenger seat 80a, as it is seen by a passenger sitting in said seating row.

As shown in Figure 3, the aircraft passenger service unit 2 comprises a row of three adjustable reading lights 26a, 26b, 26c, which are arranged next to each other.

Six electrical switches 27a, 27b, 27c, 28a, 28b, 28c are provided to the side of the reading lights 26a, 26b, 26c, a pair of two switches 27a, 27b, 27c, 28a, 28b, 28c next to each of the reading lights 26a, 26b, 26c, respectively. One of the switches 27a, 27b, 27c of each pair is configured for switching the adjacent reading light 26a, 26b, 26c, and the second switch 28a, 28b, 28c of each pair is configured for triggering a signal for calling cabin service personnel.

A row of three adjacent gaspers 29a, 29b, 29c, arranged in the lateral direction, is provided next to the switches 27a, 27b, 27c, 28a, 28b, 28c. As compared to previous approaches, the three gaspers 29a, 29b, 29c are not provided with nozzles. Instead, each of the gaspers is formed by a mouth portion of an airflow channel, also referred to as airflow outlet herein, as will be described in more detail below.

Figure 3 further displays a touchless control 30 of the aircraft passenger service unit 2. The touchless control 30 may detect a finger within a predefined short distance. Thus, an input via the touchless control 30 may be provided without actual contact. Being able to provide input without contact may reduce pathogen transmission and may lower wear and tear, when compared to touch based controls.

The aircraft passenger service unit 2 further comprises a controller 35, which is configured for receiving and processing passenger input. The passenger input may be provided via the touchless control 30 and/or the remote control 89, integrated into the armrest 87 of the passenger seat 80a, and/or the electrical switches 27a, 27b, 27c, 28a, 28b, 28c. The touchless control 30 and/or the remote control 89 may be configured to receive passenger commands regarding the gasper air outflow. The controller 35 may be arranged inside the aircraft passenger service unit 2, such that it is not visible from the passenger seat 80a during normal operation.

Next to the touchless control 30 is a removable cover 40, which covers a cavity housing at least three oxygen masks (not shown). In the event of pressure loss within the cabin, the removable cover 40 will open, the oxygen masks will drop out of the cavity and each of the passengers, sitting below the aircraft passenger service unit 2, may grasp one of the oxygen masks. The oxygen masks will be supplied with oxygen from an emergency oxygen supply 46, allowing the passengers to continue to breathe normally. The emergency oxygen supply 46, which is also usually not visible from the passenger seat 80a during normal operation, may be installed within or separately from the aircraft passenger service unit 2.

On the side opposite to the gaspers 29a, 29b, 29c, a grid 42 is formed within the aircraft passenger service unit 2. A loudspeaker (not shown), which may be used for delivering acoustic announcements to the passengers, is arranged behind said grid 42.

Next to the grid 42, there is a display panel 44, which may be configured for selectively displaying a plurality of visual signs (not shown), such as "no smoking" or "fasten your seat belt". The display panel 44 may be illuminated from behind, in order to deliver visual information to the passengers sitting below the aircraft passenger service unit 2. The display panel 44 may also be configured for displaying information from the controller 35.

Different embodiments of the aircraft passenger service unit 2, which are not explicitly shown in the figures, may be configured to be installed over rows of passenger seats 80a comprising more or less than three passenger seats. This may in particular include adjusting the number of reading lights 26a, 26b, 26c, electrical switches 27a, 27b, 27c, 28a, 28b, 28c, and gaspers 29a, 29b, 29c to the number of passenger seats arranged below the aircraft passenger service unit 2.

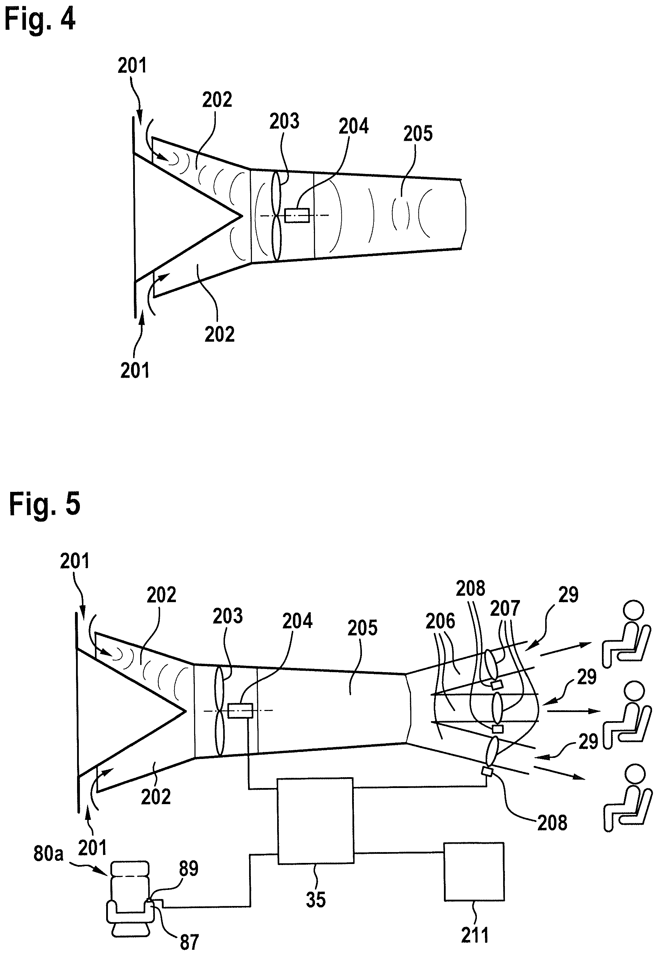

Figure 4 shows, in a schematic representation, a part of the airflow through the aircraft passenger service unit 2. This is illustrated via selected components of an aircraft passenger service unit 2 according to an exemplary embodiment of the invention. Air is drawn from an air supply system or directly from the aircraft cabin into the respective inlets 201 of two intake tubes 202. The two intake tubes 202 are in fluid communication with an airflow tube 205. In particular, the two intake tubes 202 open into the airflow tube 205.

An impeller 203 is arranged within the airflow tube 205. The impeller 203 is driven by the brushless electric motor 204, which is also arranged in the airflow tube 205. The impeller draws air from the intake tubes 202 into the airflow tube 205. To reduce noise, the intake tubes 202 are tapered towards their inlets 201, and the airflow tube 205 is tapered in the direction of airflow. In particular, the intake tubes and/or the airflow tube may be conical. Furthermore, at least one of the tapered intake tubes 202 and the tapered airflow tube 205 may contain a Helmholtz resonator design to reduce undesired noise.

Figure 5 shows a schematic partial representation of an aircraft passenger service unit 2 according to an exemplary embodiment of the invention. As shown in Fig. 4, air is drawn into the inlets 201 of the intake tubes 202 and from there passes through the airflow tube 205, with the impeller 203 driven by the electric motor 204. Subsequently, the air flows through airflow outlets 206 and past valves 207 through gaspers 29 to reach the passengers. In particular, for each of three gaspers 29, a respective airflow outlet 206 is provided and is in fluid communication with the airflow tube 205. Within each airflow outlet 206, a respective valve 207 is provided. The gaspers 29 are formed by the mouth portions of the airflow outlets 206.

Each valve 207 comprises an actuator 208 to adjust a position of the valve 207. In the exemplary embodiment of Figure 5, the valves 207 are butterfly valves. Each gasper 29 is in fluid connection with exactly one airflow outlet 206. The electric motor 204 and the actuators 208 of the valves 207 are controlled by the controller 35, which is connected to a power supply unit 211 that provides electrical power to the controller 35. The remote control 89 in the armrest 87 of the passenger seat 80a is functionally connected to the controller 35. By using the remote control 89, the passenger may set a value / a level for the desired outflow from the according gasper 29. The controller 35 receives the set value / level from the remote control 89 and controls the electric motor 204 and/or the valve 207 to generate the desired airflow.

In an embodiment, the gasper opening cross-section is between 3 cm² and 5 cm². Using the impeller 203 driven by the electric motor 204, a nominal flow through the gasper 29 of more than 6.5 l/s may be reached. The air velocity at the said nominal flow may then be greater than 1 m/s at a distance of 1 m.

An aircraft passenger service unit 2, having the components described with respect to Figures 4 and 5, may be used as the aircraft passenger service unit depicted in Figure 2 and/or Figure 3. In other words, the selected components described with respect to Figures 4 and 5 may be employed in the aircraft passenger service units of Figures 2 and 3.

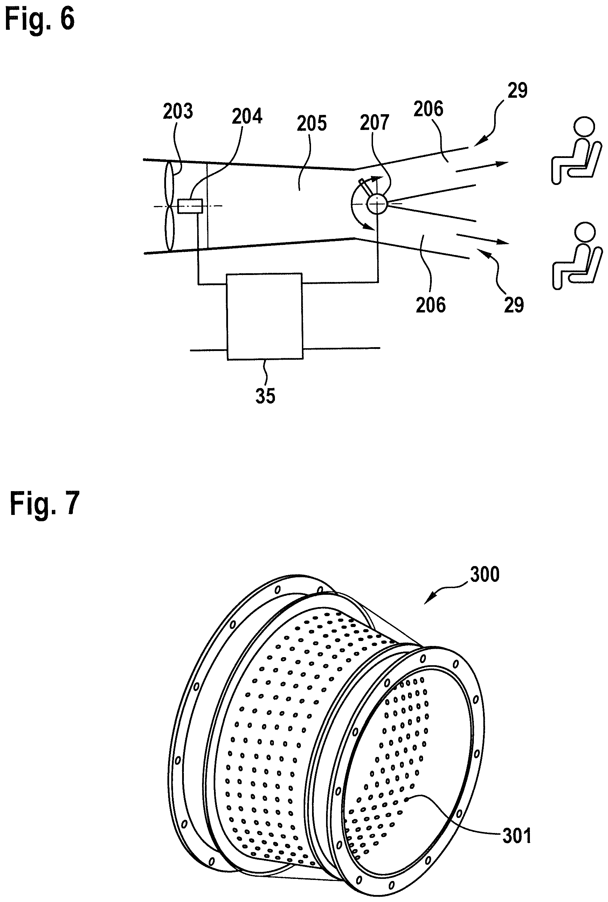

Figure 6 shows, in a schematic representation, the airflow path inside an aircraft passenger service unit 2 in accordance with a further embodiment of the invention. This is illustrated via selected components of the aircraft passenger service unit 2. Like components are denoted with the same reference numerals, and reference is made to above description of Figures 4 and 5. Again, the impeller 203 is driven by the electric motor 204 inside the airflow tube 205. Two airflow outlets 206 are connected to the airflow tube 205. A single valve 207 can be positioned to direct airflow into the airflow outlets 206. From the airflow outlets 206, the air will stream through the gaspers 29 and onto the according passengers. If the valve 207 is set to a neutral, middle position, equal quantities of outflow may be directed to each of the two airflow outlets 206 shown in Figure 6. By setting a different position of the valve 207, different relative outflows can be generated for the two airflow outlets 206. The controller 35 is able to create the outflow desired by the two passengers by varying the rotational frequency of the electric motor 204 and the position of the valve 207. In this way, only one valve 207 is sufficient for two passengers.

The impeller creates characteristic noise frequencies during operation, in particular blade passage noise dependent on the number of blades multiplied with the rotational frequency of the impeller 203. If the rotational frequency of the impeller 203 is adjusted in blade number increments, then the noise peak frequencies remain similar or the same. In an embodiment of the aircraft passenger service unit 2, a Helmholtz resonator 300 design is used to reduce noise, in particular to attenuate the characteristic noise frequencies generated by the impeller 203.

The Helmholtz resonator 300, as shown in Figure 7, has a generally conical shape with indentations or holes 301 on its inside. The indentations or holes 301 are arranged in an annular zone of the Helmholtz resonator 300. By varying the arrangement of the holes or indentations 301, the Helmholtz resonator can be tuned to specifically attenuate certain frequencies. In the embodiment shown in Figure 7, the Helmholtz resonator 300 is tuned to specifically attenuate the blade passage noise of the impeller 203. The Helmholtz resonator 300 may be arranged in the airflow tube, downstream of the impeller 203.

In addition to the tapered design, a broad-band noise attenuator, such as foam, may be used in the intake tubes 202 and/or the airflow tube 205 and/or the airflow outlets 206.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Aircraft passenger service unit (2), for being installed in an overhead position in an aircraft passenger cabin (102), the aircraft passenger service unit (2) comprising:
- at least two gaspers (29), wherein each of the at least two gaspers (29) is oriented towards a respective passenger seat (80a);
- an electric motor (204) configured to drive an impeller (203);
- an airflow tube (205), wherein the impeller (203) is located inside the airflow tube (205), wherein each of the at least two gaspers (29) is in fluid communication with the airflow tube (203) via a respective airflow outlet (206), and wherein the impeller (203) is arranged to provide an airflow to the at least two gaspers (29); and
- at least one valve (207) for controlling the airflow to the at least two gaspers (29).

2. Aircraft passenger service unit (2) according to claim 1, further comprising a controller (35) for setting a rotational speed of the impeller (203) and/or a position of the at least one valve (207) on the basis of a desired outflow from each of the at least two gaspers (29).

3. Aircraft passenger service unit (2) according to claim 2, wherein the desired outflow from each of the at least two gaspers (29) is settable by remote control (89), in particular wherein the remote control (89) is an in-seat control or part of an in-flight entertainment system.

4. Aircraft passenger service unit (2) according to claim 2 or 3, wherein the desired outflow from each of the at least two gaspers (29) is settable at the aircraft passenger service unit (2).

5. Aircraft passenger service unit (2) according to any claims 2 to 4, wherein the desired outflow from each of the at least two gaspers (29) is settable by a touchless control (30).

6. Aircraft passenger service unit (2) according to any of the preceding claims,
wherein the electric motor (204) is a brushless motor,
and/or
wherein the electric motor (204) is located inside the airflow tube (205).

7. Aircraft passenger service unit (2) according to any of the preceding claims,
wherein the airflow tube (205) is conical;
and/or
wherein, for each of the at least two gaspers, the respective airflow outlet (206) is conical;
and/or
wherein the aircraft passenger service unit (2) further comprises at least one intake tube (202) with an inlet (201), the at least one intake tube (202) being in fluid communication with the airflow tube (205), wherein the at least one intake tube (202) is in particular conical.

8. Aircraft passenger service unit (2) according to any of the preceding claims, wherein at least one of the at least one intake tube (202), the airflow tube (205), and the at least two airflow outlets (206) comprises a broadband noise attenuator, such as foam.

9. Aircraft passenger service unit (2) according to any of the preceding claims, wherein at least one of the at least one intake tube (202), the airflow tube (205), and the at least two airflow outlets (206) comprises a Helmholtz resonator (300) lining for noise reduction.

10. Aircraft passenger service unit (2) according to any of the preceding claims, wherein the controller (35) is configured to control the impeller (203) in discrete steps of rotational frequency, in particular in blade number increments.

11. Aircraft passenger service unit (2) according to any of the preceding claims, wherein each of the at least two gaspers (29) is in a pre-defined orientation, matching 95 % of humans in terms of size, when seated in the respective passenger seat (80a), without further adjustment.

12. Aircraft passenger service unit (2) according to any of the preceding claims, further comprising a removable cover (40), arranged over a plurality of oxygen masks, and/or further comprising at least one reading light (26a, 26b, 26c).

13. System comprising an aircraft passenger service unit (2) according to any of claims 1 to 12 and a remote control (89) for controlling the desired outflow from each of the at least two gaspers (29).

14. Aircraft (100), such as an airplane or a helicopter, comprising a passenger cabin (102) and a plurality of aircraft passenger service units (2) according to any of claims 1 to 12.

15. Method for controlling an aircraft passenger service unit (2) according to any of claims 1 to 12, comprising the steps of:
- receiving passenger input from at least two passengers to set a desired outflow from each of the at least two gaspers (29); and
- controlling the impeller (203) and the at least one valve (207) according to the desired outflow.
